Europäisches Patentamt

European Patent Office

Office européen des brevets

(19)

(11) EP 0 619 876 B1

(12) FASCICULE DE BREVET EUROPEEN

(45) Date de publication et mention
de la délivrance du brevet:
**19.11.1997 Bulletin 1997/47**

(21) Numéro de dépôt: **93902355.2**

(22) Date de dépôt: **21.12.1992**

(51) Int Cl.6: **G01J 3/52**

(86) Numéro de dépôt international:
**PCT/FR92/01212**

(87) Numéro de publication internationale:
**WO 93/13398 (08.07.1993 Gazette 1993/16)**

(54) **PROCEDE DE REALISATION D'UN NUANCIER PAR FRACTIONNEMENT D'UN ESPACE COLORIMETRIQUE ET UTILISATION DU NUANCIER RESULTANT**

VERFAHREN ZUR HERSTELLUNG EINER FARBSCHATTIERUNGSSAMMLUNG DURCH UNTERTEILUNG EINES FARBRAUMES UND DEREN VERWENDUNG

METHOD FOR PRODUCING A SHADE CHART BY FRACTIONATING A COLOUR SPACE AND USE OF THE RESULTING SHADE CHART

(84) Etats contractants désignés:
**BE DE ES FR GB GR IT NL**

(30) Priorité: **27.12.1991 FR 9116219**

(43) Date de publication de la demande:
**19.10.1994 Bulletin 1994/42**

(73) Titulaire: **GUILLEMIN, Jean-Pierre**
**F-51100 Reims (FR)**

(72) Inventeur: **GUILLEMIN, Jean-Pierre**
**F-51100 Reims (FR)**

(74) Mandataire: **Sauvage, Renée**
**Cabinet Sauvage**
**100 bis, avenue de Saint-Mandé**
**75012 Paris (FR)**

(56) Documents cités:
**EP-A- 0 360 657**        **FR-A- 2 468 111**
**US-A- 5 023 814**

• **COLOR RESEARCH AND APPLICATION vol. 12,**
**no. 3, 1 Juin 1987, NEW YORK pages 135 - 146**
**A.NEMCSICS 'COLOR SPACE OF THE**
**COLOROID COLOR SYSTEM'**

## Description

La présente invention concerne un procédé de réalisation d'un nuancier par fractionnement d'un espace colorimétrique correspondant à une collection déterminée de composants chromatiques, dont un noir et un blanc, pour une application industrielle particulière, et le nuancier ainsi obtenu.

Une telle application industrielle particulière est caractérisée par l'ensemble des conditions pouvant définir un type de produit coloré. Parmi ces conditions, on peut citer :

- la collection de produits monopigmentaires de base qui, par mélange approprié, permet de reproduire une teinte,
- les paramètres industriels de production de teinte,
- les écarts colorimétriques qui sont acceptables sur le plan commercial, etc.

Le marché de la peinture en bâtiment de couleur constitue un exemple d'application.

Dans cette application, la collection de produits de base est constituée d'un ensemble de "colorants universels" généralement contenus dans une machine à teinter et d'un ensemble de "bases de teintes" préconditionnées, dans lesquelles, par addition de quantités déterminées de quelques "colorants universels" distribués par la machine, il est possible de réaliser les teintes illustrées sur un nuancier correspondant.

Les paramètres industriels de production sont, dans cet exemple, représentés par :

- le suivi du pouvoir colorant des colorants,
- le suivi du pouvoir colorant des bases,
- la précision de la machine à teinter,
- la reproductibilité des résultats fournis par la machine à teinter, etc.

Un autre exemple d'application est l'impression colorée sur des emballages.

Les besoins industriels et commerciaux peuvent, d'une manière générale, être définis comme suit :

- l'illustration visuelle des tolérances acceptables dans une application déterminée pour la réalisation d'une teinte,
- l'illustration visuelle des limites de l'espace colorimétrique possible ou réalisable pour une application déterminée,
- l'assimilation à une référence du nuancier d'une teinte quelconque mesurée,
- l'assimilation d'une teinte référencée dans un premier nuancier à une référence d'un second nuancier pour une même application déterminée,
- la détermination logique des références de teinte en harmonie avec une teinte déterminée, pour des besoins de décoration,

- la bonne adaptation du référencement du nuancier au procédé de mesure de la couleur,
- le référencement du nuancier par rapport à un espace colorimétrique normalisé, etc.

Aucun nuancier existant ne permet de satisfaire à ces besoins.

Ainsi, par exemple, le nuancier auquel il est fait référence dans Color in Business, Science and Industry - Third Edition - Deane B. Judd and Gunter Wyszecki - pages 244-249, et qui est établi selon le Nu-Hue Custom Color System, est un nuancier élaboré à partir d'un espace colorimétrique théorique subdivisé en fractions dont chacune appartient à un plan vertical d'isotonalité, lesdits plans rayonnant à partir de l'axe Blanc-Noir. Un tel nuancier ne tient aucun compte des contraintes attachées à chaque application industrielle, en particulier de l'écart de couleur moyen admissible dans le cadre de ladite application.

En outre, ce nuancier, pas plus que d'autres, ne permet de réduire ce que l'on appelle l'erreur inter-instrument.

Un spectrophotométre travaillant par réflexion diffuse est un appareil destiné à mesurer le facteur spectral de réflectance d'une surface en fournissant une courbe de réflexion spectrale.

Les constructeurs de spectrophotomètres utilisent des technologies différentes dans la conception de leur matériel, notamment au niveau :

- de la géométrie optique de mesure
- du monochromateur
- du ou des récepteurs d'énergie lumineuse
- du nombre et de la configuration des bandes passantes
- du type de source lumineuse utilisée, etc...

et il s'ensuit que les courbes fournies par les matériels résultants ne sont pas superposables : c'est ce que l'on appelle l'erreur inter-instrument.

Cette erreur inter-instrument interdit d'utiliser des informations précédemment obtenues avec un spectrophotomètre d'une certaine fabrication, dans le cadre de travaux effectués avec un spectrophotomètre d'une autre fabrication.

Il serait évidemment très souhaitable de remédier à cette situation, d'autant que le besoin de pouvoir passer d'un spectrophotomètre à un autre tend à devenir crucial.

En effet, si au cours des deux dernières décennies, le matériel de mesure était peu évolutif - un même appareil pouvant être utilisé pendant plus de dix ans -, aujourd'hui, il n'est pas rare que les constructeurs mettent sur le marché des appareils de conception nouvelle tous les deux ans.

La concurrence sur le plan qualité/prix augmente le nombre de constructeurs et, par voie de conséquence, le nombre de modèles, tandis que d'un autre côté, la durée de vie utile des appareils - quant à la qualité des résultats - va en diminuant puisqu'apparaît régulièrement du matériel plus performant.

Comme l'exploitation informatique des mesures fournies par les spectrophotomètres est de plus en plus recherchée et trouve de plus en plus d'applications, l'erreur inter-instrument devient une entrave inacceptable.

En effet, chaque changement de modèle de spectrophotomètre impose de recréer la base de données précédemment établie avec le modèle de spectrophotomètre antérieur. Lors de cette re-création et quelle que soit l'activité industrielle concernée, il est nécessaire de confectionner de nouveau les échantillons de teinte à partir desquels est constituée la base de données car la stabilité dans le temps des produits de couleur n'est jamais suffisante à une conservation prolongée.

Le changement de matériel de mesure qu'impose l'évolution rapide de la technologie dans le domaine de la colorimétrie par réflexion entraîne un surcroît de travail en général beaucoup plus coûteux que l'investissement nécessaire à l'acquisition de ce nouveau matériel.

Les courbes de réflectance fournies par les spectrophotomètres sont tracées avec :

- en ordonnée, le facteur de réflectance, et
- en abscisse, la longueur d'onde.

Tant l'échelle des facteurs de réflectance que celle des longueurs d'onde doivent être réglées en calage et linéarité.

La sensibilité des composants récepteurs étant fonction de la longueur d'onde, l'étalonnage de l'échelle des facteurs de réflectance devrait être effectué à chaque tranche de longueur d'onde après que l'échelle des longueurs d'onde ait été étalonnée.

Les étalonnages dits "au blanc" et "au noir" recommandés généralement par les constructeurs et pratiqués actuellement ne permettent pas une réduction significative de l'erreur inter-instrument.

A titre d'exemple, deux appareils de géométrie optique semblable et proches de conception, mais de constructeurs différents, qénèrent dans certaines parties de l'espace chromatique CIELAB des erreurs inter-instruments d'un Δ E Lab de l'ordre de 5 unités.

Différents procédés peuvent être envisagés pour réduire l'erreur inter-instrument.

Une première méthode de correction possible consiste à effectuer, avec chaque appareil, une série importante de mesures et, par modélisation mathématique, à calculer à partir de données fournies par l'un des appareils, quelles seraient les données de l'autre pour un même protocole de mesure d'un même échantillon.

Cette méthode permettrait peut-être une bonne approximation avec un minimum de mesures nécessaires à l'étalonnage de deux appareils relativement aux valeurs de réflectance, si elle n'était affectée d'un inconvénient. En effet, suivant le signe et la valeur des écarts de réflectance dûs à l'approximation de la méthode en fonction des tranches de longueur d'onde, ces écarts même très réduits peuvent conduire à des écarts très supérieurs sur les valeurs tristimulus recalculées, puisque la méthode de calcul utilise des sommations qui conduisent au cumul des erreurs sur les réflectances.

Une seconde méthode de correction possible consiste à effectuer avec chaque appareil un nombre très important de mesures de manière à constituer une matrice d'écarts de réflectance fonctions des tranches de longueur d'onde et de la valeur des réflectances, ces mesures étant méthodiquement et uniformément réparties dans l'espace chromatique.

Une telle méthode, outre le fait qu'elle ne peut éviter l'inconvénient mentionné à propos de la première méthode, impose un nombre excessivement élevé de mesures.

La présente invention, en apportant un nouveau procédé de fractionnement de l'espace colorimétrique, qui débouche sur un nouveau nuancier, permet, entre autres applications, de réduire l'erreur inter-instrument, sans souffrir des inconvénients énoncés ci-dessus.

Pour la compréhension, il convient tout d'abord de rappeler que, par "espace colorimétrique de référence", on entend un espace tridimensionnel contenant les teintes de matériaux monopigmentaires constituant une collection de composants chromatiques de base et toutes les teintes réalisables par mélange de ces matériaux.

Le procédé de réalisation du nuancier selon l'invention consiste, comme par exemple le procédé débouchant sur le nuancier évoqué par le document "Color in Business, Science and Industry" précité :

- à partir d'une collection de composants chromatiques, dits "de base", laquelle collection couvre un espace colorimétrique comprenant toutes les teintes réalisables par mélange desdits composants chromatiques de base, et
- à subdiviser l'espace colorimétrique en fractions à chacune desquelles on attribue une référence, l'ensemble desdites fractions ainsi délimitées et identifiées constituant le nuancier attendu.

Pour être adapté à une application industrielle particulière, le procédé selon l'invention doit déboucher sur un nuancier notamment tel que l'écart de couleur ΔE soit constant d'une fraction à l'autre.

Etant donné que l'écart de couleur ΔE augmente avec l'éloignement de l'axe Blanc-Noir, il n'est pas possible d'aboutir au maintien d'un ΔE constant entre fractions si l'on fractionne l'espace colorimétrique comme l'enseigne l'art antérieur précité, c'est-à-dire dans des clans verticaux rayonnant à partir dudit axe. Ce problème est résolu par le procédé selon l'invention qui débouche sur un nuancier fractionné en secteurs volumiques.

Plus précisément, à la différence du procédé connu, et pour être adapté à une application industrielle particulière, le procédé se caractérise par les étapes suivantes :

- on constitue ladite collection de composants chromatiques de base telle sorte que l'espace colorimétrique qu'elle couvre est un espace dit "efficace" vis-à-vis de l'application envisagée,
- on évalue ledit espace colorimétrique efficace en choisissant un espace colorimétrique de référence, qui englobe ledit espace colorimétrique efficace, et en déterminant, par mesure des tons pleins de chaque composant chromatique de base de ladite collection, et calculs en eux-mêmes connus effectués à partir de ces mesures, les coordonnées trichromatiques desdits composants de base dans l'espace colorimétrique de référence,
- on classe les composants chromatiques de base, sauf le noir et le blanc, par ordre croissant d'anale de teinte h°, obtenant ainsi un ensemble de composants chromatiques dits "standard" et l'on positionne graphiquement chacun d'entre eux d'après ses coordonnées trichromatiques, abstraction faite de la luminance, la jonction mutuelle desdites positions aboutissant au tracé d'un certain nombre de polygones de surfaces diverses,
- on sélectionne parmi lesdits composants chromatiques standard un sous-ensemble de composants, dits "composants chromatiques efficaces", en ne conservant desdits composants chromatiques standard que ceux qui forment les limites externes du polygone de plus grande surface,
- on détermine, dans l'espace colorimétrique efficace et pour chacun des couples de composants chromatiques efficaces immédiatement voisins sur le tracé graphique, dits "couples efficaces", pris avec le noir et le blanc, les limites du secteur volumique, dit "efficace", auquel correspond ledit couple efficace, et
- on procède à l'opération de fractionnement de l'espace colorimétrique en fractionnant chaque secteur volumique efficace en plans d'isoluminance et en fonction de l'écart de couleur global moyen $\Delta E$ d'exploitation admissible pour l'application industrielle considérée.

Dans un mode de mise en oeuvre préféré, l'espace colorimétrique de référence est l'espace colorimétrique dit CIELAB, qui est l'espace déterminé par la CIE en 1976 pour l'illuminant D65 et l'observateur 2° et qui est défini par les variables L*, a*, b*, telles que L* représente la luminance ou sensation de clarté avec la valeur O tour le noir et la valeur 100 pour le blanc ; a*, portée en abscisse, est la composante chromatique allant du vert au rouge ; b*, portée en ordonnée, est la composante chromatique allant du bleu au jaune.

L'angle de teinte $h_{ab}$ dans l'espace CIELAB est défini par la relation :

$$h_{ab} = tg^{-1} (b*/a*) = arc\ tg\ (b*/a*)$$

où $h_{ab}$ est situé entre 0 et 90° si a* et b* sont tous deux positifs, entre 90° et 180° si b* est positif et a* est négatif, entre 180° et 270° si b* est négatif et a* positif, et entre 270° et 360° si a* et b* sont tous deux négatifs.

Si l'on choisissait l'espace u,v CIE 1976 comme espace de référence, on aurait

$$h_{uv} = tg^{-1} (v*/u*) = arc\ tg\ (v*/u*).$$

De son côté, l'écart de couleur global moyen $\Delta E$, par exemple dans l'espace CIELAB, est calculé par la relation :

$$\Delta E*ab = [(\Delta L)^2 + (\Delta a*)^2 + (\Delta b*)^2]^{1/2}$$

Lorsque l'espace de référence est l'espace CIELAB, l'étape d'évaluation de l'espace colorimétrique efficace comporte :

- la mesure au spectrophotomètre du facteur de réflectance R de mélanges binaires de composants chromatiques de base,
- le calcul des coefficients spectraux K d'absorption et S de diffusion de chaque composant à partir des valeurs de R ainsi mesurées en appliquant les lois de Kubelka-Munk et de Saunderson,
- à partir de ces valeurs K et S, le calcul du facteur de réflectance R des mélanaes de même composition qualitative que les mélanges précédemment mesurés mais dans toutes autres proportions, puis
- le passage dans l'espace chromatique L, a, b de la CIE.

Pour déterminer les limites du secteur volumique efficace de chacun desdits couples efficaces, pris avec le noir et le blanc :

- on détermine, dans l'espace colorimétrique de référence ;

  . un point Li dont les coordonnées correspondent au composant noir
  . un point Ls dont les coordonnées correspondent au composant blanc,
  . un point Hi dont les coordonnées correspondent à celui des deux composants du couple efficace qui possède le plus petit angle de teinte
  . un point Hs dont les coordonnées correspondent à celui des deux composants du couple efficace qui possède le plus grand angle de teinte, et

- on détermine les lieux $\overline{Ls,Li}$, $\overline{Ls,Hs}$, $\overline{Ls,Hi}$, $\overline{Hs,Hi}$,

$\overline{\text{Li,Hi}}$ et $\overline{\text{Li,Hs}}$, lesquels limitent ledit secteur volumique efficace.

Chacun des lieux est déterminé par calcul à partir des valeurs K et S desdits couples efficaces, du noir et du blanc.

Le fractionnement de l'espace volumique efficace est effectué en trois temps :

- fractionnement en plans d'isoluminance selon un nombre de plans égal à la valeur de la différence de luminance entre le blanc et le noir, divisée par l'écart de couleur global moyen admissible pour l'application considérée,
- sur chacun desdits plans, détermination des limites de l'espace calorimétrique efficace par calcul et juxtaposition des lieux des mélanges de composants chromatiques efficaces amenés à isoluminance par mélange des composants de chaque couple efficace avec du noir ou du blanc, selon que la luminance du plan est inférieure ou supérieure à la luminance dudit couple dans les proportions considérées, et
- fractionnement par isosaturation en traçant, sur chaque plan d'isoluminance, des cercles concentriques à un pas égal à l'écart de couleur global moyen admissible pour l'application considérée, puis en déterminant autant de secteurs d'anneau que les anneaux complets ou parties d'anneaux ainsi obtenus contiennent de secteurs d'angle de valeur 2.δh°, tel que

$$\delta h° = \text{arctg } (\Delta E/2)/[C^2 - \Delta E^2/4]^{1/2}$$

où

h° est l'angle de teinte
$\Delta$ E est l'écart de couleur global moyen admissible pour l'application considérée
C est la moyenne des rayons des cercles exprimés en unité CIELAB.

Le référencement de chaque fraction de section volumique, c'est-à-dire de chaque teinte du nuancier, indique les valeurs de luminance L et les valeurs C et h° de ladite teinte et, à chaque référence de teinte, correspondent, d'une part, une courbe de réémission spectrale théorique obtenue par calcul de synthèse de réflectance d'un mélange dont la composition qualitative est définie par la fraction de secteur volumique du nuancier auquel appartient la teinte et, d'autre part, la composition quantitative de cette dernière.

La réduction de l'erreur inter-instrument à l'aide du nuancier selon l'invention entre :

- le spectrophotomètre, dit "de base", employé pour la réalisation dudit nuancier, et
- un spectrophotomètre d'une autre fabrication, dit "le nouveau spectrophotomètre",

comporte les étapes suivantes :

- on mesure, avec le nouveau spectrophotomètre, le facteur spectral de réflectance R'($\lambda$) des mélanges ayant servi au calcul des coefficients spectraux K($\lambda$) et S($\lambda$) de chaque composant de base de la collection utilisée pour la réalisation au nuancier,
- on recalcule, d'une manière connue en soi, à partir desdits facteurs spectraux de réflectance R'($\lambda$), les valeurs spécifiques au nouveau spectrophotomètre des coefficients spectraux K'($\lambda$) et S'($\lambda$) de chaque composant de base,
- on recalcule, par synthèse de réflectance, les facteurs spectraux de réflectance R'($\lambda$) de chaque référence du nuancier, dite "référence de base", à partir de la composition qualitative et quantitative liée à chacune des références,
- on procède à un nouveau référencement par calcul des valeurs L, C et h° à partir des facteurs spectraux de réflectance R'($\lambda$) de chaque référence,
- on établit une correspondance entre chaque référence de base et la référence obtenue avec le nouveau spectrophotomère,
- on assimile toute mesure de facteur spectral de réflectance R'($\lambda$) faite avec le nouveau spectrophotomètre à une référence du nouveau référencent, et
- on recherche l'équivalence entre le nouveau référencement et le référencement de base.

Comme on le verra plus loin, le nuancier selon l'invention peut recevoir d'autres applications.

L'invention sera mieux comprise à la lecture de la description détaillée ci-après d'un mode de réalisation du nuancier seloh l'invention et de son application à la réduction de l'erreur inter-instrument, description faite en référence au dessin dans lequel :

- la figure 1 représente l'identification graphique des composants chromatiques efficaces,
- la figure 2 représente l'un des secteurs volumiques efficaces,
- la figure 3 illustre le fractionnement par isosaturation d'un plan d'isoluminance,
- le figure 4 montre en perspective un secteur d'anneau correspondant à une teinte du nuancier.

Soit une application industrielle déterminée et une collection correspondante de, par exemple, onze composants chromatiques de base référencés 1 à 11, plus un noir et un blanc, référencés respectivement B et W, cette application admettant un écart de teinte de $\Delta$E d'exploitation.

La collection de composants chromatiques 1 à 11, B, W couvre un espace colorimétrique dit "efficace", comprenant toutes les teintes réalisables par mélange desdits composants chromatiques de base. On évalue cet espace colorimétrique efficace en choisissant un espace colorimétrique de référence, par exemple l'espace CIELAB, qui englobe ledit espace colorimétrique efficace, et en déterminant, par mesure des tons pleins de chaque composant 1 à 11, B, W, et calculs en eux-mêmes connus effectués à partir de ces mesures, les coordonnées trichromatiques L, a, b desdits composants de base dans l'espace colorimétrique de référence.

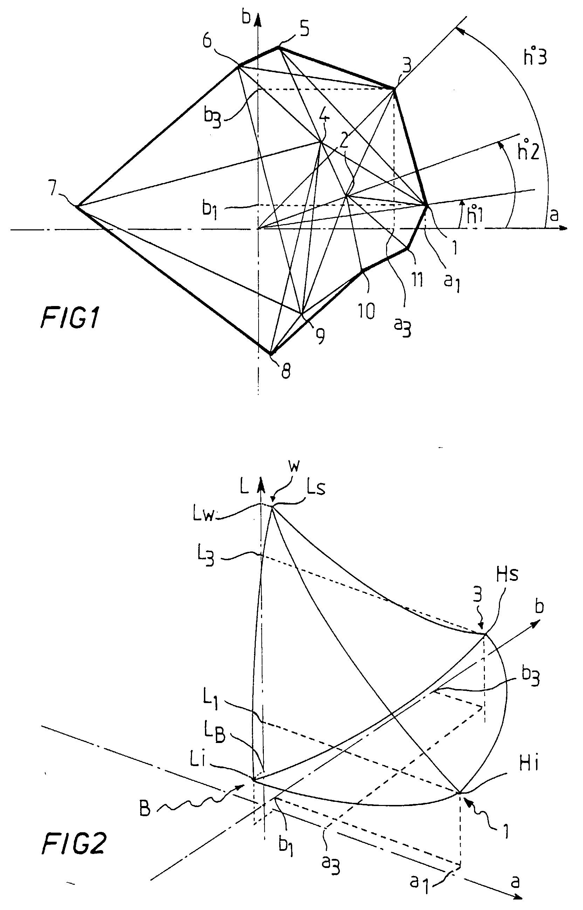

On classe ensuite les composants chromatiques de base, 1 à 11, par ordre croissant d'angle de teinte h°, obtenant ainsi un ensemble de composants chromatiques dits "standard" et l'on positionne graphiquement chacun d'entre eux d'après ses coordonnées a et b, comme le montre la figure 1.

La jonction mutuelle des points correspondant aux composants 1 à 11 aboutit au tracé d'un certain nombre de polygones 1-2-3, 1-2-11, 1-4-5, etc. de surfaces diverses, et l'on sélectionne parmi lesdits composants chromatiques standard 1 à 11 un sous-ensemble de composants, dits "composants chromatiques efficaces", en ne conservant desdits composants chromatiques standard que ceux 1,3,5,6,7,8,10 et 11 qui forment les limites externes du polygone de plus grande surface.

On détermine ensuite, dans l'espace colorimétrique efficace et pour chacun des couples de composants chromatiques efficaces immédiatement voisins sur le tracé graphique, dits "couples efficaces", pris avec le noir et le blanc, 1-3-B-W, 3-5-B-W, 5-6-B-W, etc, les limites du secteur volumique, dit "efficace", auquel correspond ledit couple efficace.

Le secteur volumique efficace 1-3-B-W est représenté, à titre d'exemple, à la figure 2.

Pour définir les limites du secteur volumique efficace 1-3-B-W ;

- on détermine, dans l'espace colorimétrique de référence :

  . un point Li dont les coordonnées correspondent au composant noir B,
  . un point Ls dont les coordonnées correspondent au composant blanc W,
  . un point Hi dont les coordonnées $L_1$, $a_1$, $b_1$ correspondent à celui des deux composants du couple efficace qui possède le plus petit angle de teinte (h°1), c'est-à-dire au composant 1, et
  . un point Hs dont les coordonnées $L_3$, $a_3$, $b_3$ correspondent à celui des deux composants du couple efficace qui possède le plus grand angle de teinte (h°3), c'est-à-dire au composant 3, et

- on détermine les lieux $\overline{Ls,Li}$, $\overline{Ls,Hs}$, $\overline{Ls,Hi}$, $\overline{Hs,Hi}$, $\overline{Li,Hi}$ et $\overline{Li,Hs}$, lesquels limitent ledit secteur volumique efficace.

Les lieux $\overline{Li,Hi}$ et $\overline{Li,Hs}$ sont déterminés par les mélanges composant noir B + composant 1 et composant noir B + composant 3 et calcul à partir des valeurs K et S des composants en cause. De même, les lieux $\overline{Ls, Hi}$ et $\overline{Ls, Hs}$ sont déterminés par les mélanges composant blanc W + composant 1 et composant blanc W + composant 3. Enfin le lieu $\overline{Hi,Hs}$ est déterminé par les mélanges composant 1 + composant 3.

L'espace colorimétrique efficace est constitué de la juxtaposition de l'ensemble des secteurs volumiques efficaces.

On fractionne chaque secteur volumique efficace en fonction de l'écart de couleur global moyen $\Delta E$ précité qui, par exemple, est évalué à 2 en $\Delta E$ CIELAB.

Pour ce faire, on fractionne en plans d'isoluminance selon un nombre N de plans égal à la valeur de la différence de luminance entre le blanc et le noir, divisée par l'écart de couleur global moyen admissible pour l'application considérée.

Si la luminance $L_W$ du blanc est de 98 et celle $L_B$ du noir de 18, on aura

$$N_{plans} = (L_W-L_B)/\Delta E = (94-18)/2 = 38.$$

Sur chacun des plans d'isoluminance, on détermine ensuite les limites de l'espace colorimétrique efficace par calcul et juxtaposition des lieux des mélanges de composants chromatiques efficaces amenés à isoluminance par mélange des composants de chaque couple efficace avec du noir ou du blanc, selon que la luminance du plan est inférieure ou supérieure à la luminance dudit couple dans les proportions considérées.

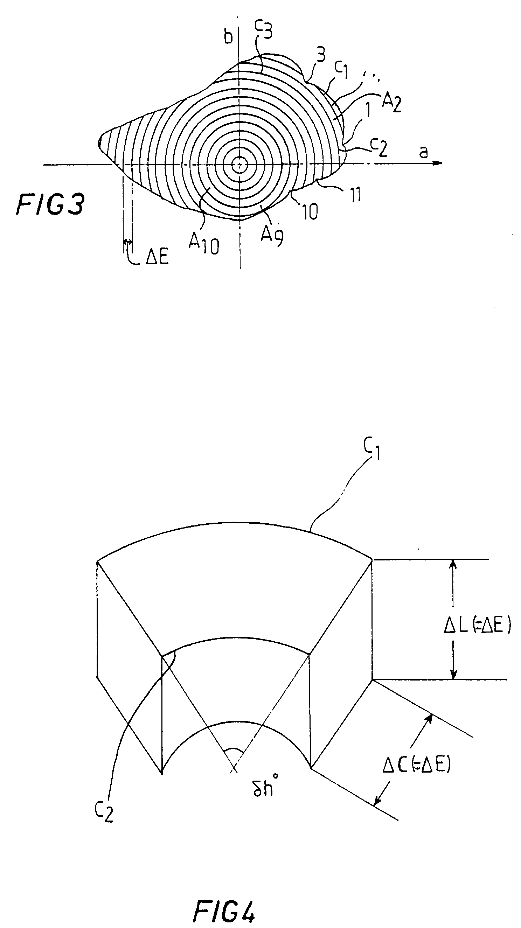

Le plan d'isoluminance pour L = 5Ø est représenté à la figure 3.

On fractionne ensuite chaque plan d'isoluminance en traçant, sur chacun desdits plans d'isoluminance, des cercles concentriques d'isosaturation, tels que C1, C2, C3, etc. à un pas égal à $\Delta E$, puis on détermine autant de secteurs d'anneau (Figure 4) que les anneaux complets (A9, A1Ø, etc.) ou parties d'anneaux (A1, A2, etc.) ainsi obtenus contiennent de secteurs d'angle de valeur 2.δh°, avec δh° tel que défini plus haut.

Le fractionnement ainsi effectué détermine des volumes correspondant à des secteurs d'anneaux de section carrée $\Delta C$. $\Delta L$ (= $\Delta E$. $\Delta E$) au centre de chacun desquels est située une teinte de référence espacée des teintes de référence juxtaposées d'une valeur égale à $\Delta E$.

En additionnant le nombre de teintes contenues dans chaque plan, on obtient le nombre de teintes réalisables, au $\Delta E$ près considéré, avec la collection de composants chromatiques de base.

Chaque teinte obtenue par le fractionnement décrit ci-dessus est identifiée par trois références alphanumériques comportant chacune une lettre et quatre chiffres.

Les trois références correspondent aux valeurs L, C, h° définies plus haut.

La valeur L est référencée par la lettre L suivie de quatre chiffres correspondant à la valeur entière de la luminance multipliée par 1ØØ. Ainsi, si la luminance est de 57,65, la référence sera L 5765.

La valeur C est référencée par la lettre C suivie de quatre chiffres correspondant à la valeur entière de la moyenne des rayons des cercles d'isosaturation concernés divisée par 10. Ainsi, si cette moyenne est de 25,42, la référence sera C 0254.

Enfin, la valeur h° est référencée par la lettre H suivie de quatre chiffres correspondant à la valeur entière de l'angle de teinte divisée par 10. Ainsi, si l'angle est de 85,46°, la référence sera H 0854.

Une telle teinte sera donc référencée L 5765 C 0254 H 0854.

Chaque référence de teinte est en outre caractérisée par une courbe de réémission spectrale théorique obtenue par calcul de synthèse de réflectance d'un mélange dont la composition qualitative est définie par la fraction de section volumique du nuancier auquel appartient la teinte et dont la composition quantitative est déterminée par un procédé connu de calcul de formulation. Cette composition est également liée à la référence.

Le nuancier selon l'invention est défini par l'ensemble des références des teintes (secteurs volumiques) et des courbes théoriques associées.

L'exploitation du nuancier selon l'invention suppose que deux conditions minimales soient réunies :

- que la collection de composants chromatiques de base soit définie et constante, et
- que les valeurs K et S de chacun des composants de base aient été établies à partir de mesures effectuées à l'aide d'un appareil, dit appareil de base, également défini et constant. Pour utiliser le nuancier selon l'invention dans le cadre de la réduction de l'erreur inter-instrument entre :
- le spectrophotomètre, dit "de base", employé pour la réalisation dudit nuancier, et
- un spectrophotomètre d'une autre fabrication, dit "le nouveau spectrophotomètre",

on procède comme indiqué plus haut, à savoir :

- on mesure, avec le nouveau spectrophotomètre, le facteur spectral de réflectance R'($\lambda$) des mélanges ayant servi au calcul des coefficients spectraux K ($\lambda$) et S($\lambda$) de chaque composant de base de la collection utilisée pour la réalisation du nuancier,
- on recalcule, d'une manière connue en soi, à partir desdits facteurs spectraux de réflectance R'($\lambda$), les valeurs spécifiques au nouveau spectrophotomètre des coefficients spectraux K'($\lambda$) et S'($\lambda$) de chaque composant de base,
- on recalcule, par synthèse de réflectance, les facteurs spectraux de réflectance R'($\lambda$) de chaque référence du nuancier, dite "référence de base" $Ref_b$, à partir de la composition qualitative et quantitative liée à chacune des références,
- on procède à un nouveau référencement $Ref_n$ par calcul des valeurs L, C et h° à partir des facteurs spectraux de réflectance R'($\lambda$) de chaque référence,
- on établit une correspondance entre chaque référence de base $Ref_b$ et la référence $Ref_n$ obtenue avec le nouveau spectrophotomètre,
- on assimile toute mesure de facteur spectral de réflectance R'($\lambda$) faite avec le nouveau spectrophotomètre à une référence $Ref_n$ du nouveau référencement, et
- on recherche l'équivalence entre le nouveau référencement $Ref_n$ et le référencement de base $Ref_b$.

On peut ainsi retrouver la courbe spectrale de la fraction de secteur volumique correspondante du spectrophotomètre de base dans les limites de la discontinuité du $\Delta E$ de tolérance ayant servi au fractionnement.

Une méthode plus fine permet de se libérer de la discontinuité en prenant soin de noter les écarts $\Delta L$, $\Delta C$ et $\Delta h°$ de la mesure effectuée avec le nouveau spectrophotomètre par rapport aux valeurs exactes de la teinte représentée par la fraction de secteur volumique de la référence assimilée $Ref_n/Ref_b$. En ajoutant ces écarts aux valeurs exactes de la teinte de référence équivalente dans le référencement de base $Ref_b$ et en calculant la formule (composition quantitative et qualitative) correspondant à cette teinte exacte, on peut obtenir le facteur spectral de réflectance corrrespondant au spectrophotomètre de base dans la composition qualitative de référence.

Si l'on a pris soin d'effectuer, avec le spectrophotomètre de base, un second référencement de base dans un espace colorimétrique ne différant du premier espace colorimétrique de base que par un illuminant distinct, il est possible en appliquant la même méthodologie avec le nouveau spectrophotomètre de transférer les valeurs tristimulus de la teinte mesurée sous un autre illuminant et donc de pouvoir tenir compte de la métamérie.

Le nuancier selon l'invention a de nombreuses autres applications :

1 - l'illustration visuelle des tolérances acceptables

L'une des difficultés rencontrées dans le domaine de la couleur est l'impossibilité de visualiser les écarts acceptables définis par une tolérance chiffrée entre le donneur d'ordre et l'exécutant de l'ordre.

Grâce au nuancier proposé, il est possible de réaliser matériellement les teintes juxtaposées à celle d'une référence donnée. Ces teintes étant, par définition, dans la limite des tolérances, il est permis de visualiser les écarts tolérés.

2 - l'illustration visuelle des limites de l'espace réalisable

De la même manière, il est souvent difficile de visualiser les teintes de saturation maximum réalisables avec une collection donnée de composants chromatiques, pour une luminance et un angle de teinte donnés.

Le nuancier selon l'invention permet de rechercher le référence d'une telle teinte et de la réaliser matériellement pour la visualiser.

3 - l'assimilation d'une teinte à une référence du nuancier.

Grâce au nuancier selon l'invention, il est aisé de trouver la référence correspondant à une mesure effectuée sur une teinte quelconque. Cette référence est, de par la conception même du nuancier, la teinte optimale réalisable dans les limites de tolérance de l'application considérée.

4 - la détermination loqique des références de teintes en harmonie visuelle

Pour les besoins de la décoration, il est possible de rechercher des références de teintes en harmonie avec une référence quelconque, par simple calcul sur les références.

## Revendications

1. Procédé de réalisation d'un nuancier par fractionnement d'un espace colorimétrique correspondant à une collection (1 à 11, B,W) déterminée de composants chromatiques, dont un noir et un blanc, qui consiste :

   - à partir d'une collection (1 à 11, B,W) de composants chromatiques, dits "de base", laquelle collection couvre un espace colorimétrique comprenant toutes les teintes réalisables par mélange desdits composants chromatiques de base, et
   - à subdiviser l'espace colorimétrique en fractions à chacune desquelles on attribue une référence ($Ref_b$), l'ensemble desdites fractions ainsi délimitées et identifiées constituant le nuancier attendu,

   caractérisé en ce que, pour adapter ledit procédé à une application industrielle particulière, ledit procédé comporte, en outre les étapes suivantes :

   - on constitue ladite collection de telle sorte que l'espace colorimétrique qu'elle couvre est un espace dit "efficace" vis-à-vis de l'application envisagée,
   - on évalue ledit espace colorimétrique efficace en choisissant un espace colorimétrique de référence, qui englobe ledit espace colorimétrique efficace, et en déterminant, par mesure des tons pleins de chaque composant chromatique de base de ladite collection, et calculs en eux-mêmes connus effectués à partir de ces mesures, les coordonnées trichromatiques desdits composants de base dans l'espace colorimétrique de référence,

   - on classe les composants chromatiques de base (1 à 11), sauf le noir et le blanc, par ordre croissant d'angle de teinte h°, obtenant ainsi un ensemble de composants chromatiques dits "standard" et l'on positionne graphiquement chacun d'entre eux d'après ses coordonnées trichromatiques, abstraction faite de la luminance, la jonction mutuelle desdites positions aboutissant au tracé d'un certain nombre de polygones de surfaces diverses,
   - on sélectionne parmi lesdits composants chromatiques standard un sous-ensemble de composants, dits "composants chromatiques efficaces", en ne conservant desdits composants chromatiques standard que ceux (1,3,5,6,7,8,1Ø,11) qui forment les limites externes du polygone de plus grande surface,
   - on détermine, dans l'espace colorimétrique efficace et pour chacun des couples de composants chromatiques efficaces immédiatement voisins sur le tracé graphique (1, 3), dits "couples efficaces", pris avec le noir (B) et le blanc (W), les limites du secteur volumique, dit "efficace", auquel correspond ledit couple efficace et
   - on procède à l'opération de fractionnement de l'espace colorimétrique en fractionnant chaque secteur volumique efficace en plans d'isoluminance et en fonction de l'écart de couleur global moyen $\Delta E$ d'exploitation admissible pour l'application industrielle considérée.

2. Procédé selon la revendication 1, caractérisé en ce que l'espace colorimétrique de référence est l'espace CIELAB.

3. Procédé selon la revendication 2, caractérisé en ce que l'étape d'évaluation de l'espace colorimétrique efficace comporte :

   - la mesure au spectrophotomètre du facteur de réflectance R de mélanges binaires de composants chromatiques de base (1 à 11, B,W),
   - le calcul des coefficients spectraux K d'absorption et S de dfffusion de chaque composant à partir des valeurs de R ainsi mesurées en appliquant les lois de Kubelka-Munk et de Saunderson,
   - à partir de ces valeurs K et S, le calcul du facteur de réflectance R des mélanges de même composition qualitative que les mélanges précédemment mesurés mais dans toutes autres proportions, puis

- le passage dans l'espace chromatique L, a, b de la CIE.

4. Procédé selon l'une quelconque des revendications 1 à 3, caractérisé en ce que, pour déterminer les limites du secteur volumique efficace de chacun desdits couples efficaces, pris avec le noir et le blanc (1,3,B,W) :

- on détermine, dans l'espace colorimétrique de référence :

  . un point Li dont les coordonnées correspondent au composant noir (B),
  . un point Ls dont les coordonnées correspondent au composant blanc (W),
  . un point Hi dont les coordonnées ($L_1$, $a_1$, $b_1$) correspondent à celui (1) des deux composants du couple efficace qui possède le plus petit angle de teinte ($h_1$)
  . un point Hs dont les coordonnées ($L_3$, $a_3$, $b_3$) correspondent à celui (3) des deux composants du couple efficace qui possède le plus grand angle de teinte ($h_3$), et

- on détermine les lieux $\overline{Ls,Li}$, $\overline{Ls,Hs}$, $\overline{Ls,Hi}$, $\overline{Hs,Hi}$, $\overline{Li,Hi}$ et $\overline{Li,Hs}$, lesquels limitent ledit secteur volumique efficace.

5. Procédé selon la revendication 4, caractérisé en ce que chacun des lieux est déterminé par calcul à partir des valeur K et S desdits couples efficaces, du noir et du blanc (1,3,B,W).

6. Procédé selon la revendication 4 ou 5, caractérisé en ce que le fractionnement de l'espace volumique efficace est effectué en trois temps :

- fractionnement en plans d'isoluminance selon un nombre de plans égal à la valeur de la différence ($L_W$-$L_B$) de luminance entre le blanc et le noir, divisée par l'écart de couleur global moyen admissible ($\Delta E$) pour l'application considérée,

- sur chacun desdits plans, détermination des limites de l'espace colorimétrique efficace par calcul et juxtaposition des lieux des mélanges de composants chromatiques efficaces amenés à isoluminance par mélange des composants de chaque couple efficace avec du noir ou du blanc, selon que la luminance du plan est inférieure ou supérieure à la luminance dudit couple dans les proportions considérées, et

- fractionnement par isosaturation en traçant, sur chaque plan d'isoluminance, des cercles concentriques ($C_1$, $C_2$, $C_3$, etc...) à un pas égal à l'écart de couleur global moyen admissible ($\Delta E$) pour l'application considérée, puis en déterminant autant de secteurs d'anneau que les anneaux complets ($A_9$, $A_{10}$, etc...) ou parties d'anneaux ($A_1$, $A_2$, etc...) ainsi obtenus contiennent de secteurs d'angle de valeur $2.\delta h°$, tel que

$$\delta h° = \text{arctg} \, (\Delta E/2)/[C^2 - \Delta E^2/4]^{1/2}$$

où

  h° est l'angle de teinte
  $\Delta E$ est l'écart de couleur global moyen admissible pour l'application considérée
  C est la moyenne des rayons des cercles ($C_1$, $C_3$) exprimés en unité CIELab.

7. Procédé selon la revendication 6, caractérisé en ce que le référencement de chaque fraction de section volumique, c'est-à-dire de chaque teinte du nuancier, indique les valeurs de luminance L et les valeurs C et h° de ladite teinte.

8. Procédé selon la revendication 6 ou 7, caractérisé en ce qu'à chaque référence de teinte correspondent, d'une part, une courbe de réémission spectrale théorique obtenue par calcul de synthèse de réflectance d'un mélange dont la composition qualitative est définie par la fraction de section volumique du nuancier auquel appartient la teinte et, d'autre part, la composition quantitative de cette dernière.

9. Utilisation du nuancier obtenu directement par le procédé selon l'une quelconque des revendications 3 à 8, pour la réduction de l'erreur inter-instrument entre :

- le spectrophotomètre, dit "de base", employé pour la réalisation dudit nuancier, et
- un spectrophotomètre d'une autre fabrication, dit "le nouveau spectrophotomètre",

    caractérisé en ce qu'elle comporte les étapes suivantes :

- on mesure, avec le nouveau spectrophotomètre, le facteur spectral de réflectance R'($\lambda$) des mélanges ayant servi au calcul des coefficients spectraux K($\lambda$) et S($\lambda$) de chaque composant de base de la collection utilisée pour la réalisation du nuancier,
- on recalcule, d'une manière connue en soi, à partir desdits facteurs spectraux de réflectance R'($\lambda$), les valeurs spécifiques au nouveau spectrophotomètre des coefficients spectraux K'($\lambda$) et S'($\lambda$) de chaque composant de base,
- on recalcule, par synthèse de réflectance, les facteurs spectraux de réflectance R'($\lambda$) de cha-

que référence du nuancier, dite "référence de base" (Ref_b), à partir de la composition qualitative et quantitative liée à chacune de référence,

- on procède à un nouveau référencement (Ref_n) par calcul des valeurs L, C et h° à partir des facteurs spectraux de réflectance R'(λ) de chaque référence,

- on établit une correspondance entre chaque référence de base (Ref_b) ) et la référence (Ref_n) obtenue avec le nouveau spectrophomère,

- on assimile toute mesure de facteur spectral de réflectance R'(λ) faite avec le nouveau spectrophotomètre à une référence (Ref_n) du nouveau référencement, et

- on recherche l'équivalence entre le nouveau référencement (Ref_n) et le référencement de base (Ref_b).

## Patentansprüche

1. Verfahren zur Herstellung einer Farbpalette durch Fraktionierung eines Farbraums, der einer bestimmten Sammlung (1 bis 11, B, W) von Farbkomponenten, darunter ein Schwarz und ein Weiß, entspricht, das darin besteht, daß

- man von einer "Basissammlung" genannten Sammlung (1 bis 11, B, W) von Farbkomponenten ausgeht, die einen Farbraum abdeckt, der alle durch Mischen dieser Basisfarbkomponenten herstellbaren Farbtöne umfaßt, und

- man den Farbraum in Fraktionen teilt, deren jeder eine Kennzeichnung (Ref_b) zugewiesen wird, wobei die Gesamtheit dieser auf diese Weise abgegrenzten und gekennzeichneten Fraktionen die erwartete Farbpalette darstellt,

dadurch gekennzeichnet, daß das Verfahren zu seiner Anpassung an eine besondere industrielle Anwendung außerdem die folgenden Schritte umfaßt:

- man bildet die Sammlung so, daß der Farbraum, den sie abdeckt, ein sog. "wirksamer" Raum bezüglich der betreffenden Anwendung ist,

- man bestimmt diesen wirksamen Farbraum, indem man einen Bezugsfarbraum wählt, der den wirksamen Farbraum umfaßt, und indem man durch Messung der Volltöne jeder Basisfarbkomponente dieser Sammlung und durch ausgehend von diesen Messungen durchgeführten, an sich bekannten Rechnungen die trichromatischen Koordinaten dieser Basiskomponenten im Bezugsfarbraum bestimmt,

- man ordnet die Basisfarbkomponenten (1 bis 11) außer Schwarz und Weiß in der Reihenfolge des zunehmenden Farbtonwinkels h° und erhält auf diese Weise eine Menge von sog. Standardfarbkomponenten und man bestimmt die Lage jeder von ihnen nach ihren trichromatischen Koordinaten, abgesehen von der Helligkeit, wobei durch gegenseitiges Verbinden dieser Lagen eine gewisse Anzahl von Vielecken von unterschiedlicher Fläche gezeichnet werden,

- man wählt von diesen Standardfarbkomponenten eine Untergruppe von Komponenten aus, "wirksame Farbkomponenten" genannt, indem man von diesen Standardfarbkomponenten nur diejenigen (1, 3, 5, 6, 7, 8, 10, 11) nimmt, die die Außengrenzen des Vielecks mit der größten Fläche bilden,

- man bestimmt in dem wirksamen Farbraum und für jedes der Paare von auf der graphischen Zeichnung (1,3) unmittelbar benachbarten wirksamen Farbkomponenten, "wirksame Paare" genannt, einschließlich Schwarz (B) und Weiß (W), die Grenzen des Volumensektors, "wirksamer" Volumensektor genannt, dem dieses wirksame Paar entspricht, und

- man nimmt die Fraktionierung des Farbraums vor, indem man jeden wirksamen Volumensektor in Abhängigkeit von der für die betreffende industrielle Anwendung zulässigen mittleren Gesamtfarbabweichung ΔE in Ebenen gleicher Helligkeit fraktioniert.

2. Verfahren nach Anspruch 1, dadurch gekennzeichnet, daß der Bezugsfarbraum der CIELAB-Raum ist.

3. Verfahren nach Anspruch 2, dadurch gekennzeichnet, daß der Schritt der Bestimmung des wirksamen Farbraums folgende Schritte umfaßt:

- die Messung des Reflexionsgrads R der binären Mischungen von Basisfarbkomponenten (1 bis 11, B, W) mit dem Spektralfotometer,

- die Berechnung der Spektralkoeffizienten K der Absorption und S der Streuung jeder Komponente ausgehend von den auf diese Weise gemessenen Werten von R unter Anwendung der Gesetze von Kubelka-Munk und Saunderson,

- ausgehend von diesen Werten K und S die Berechnung des Reflexionsgrads R der Mischungen mit derselben qualitativen Zusammensetzung wie die vorher gemessenen Mischungen, aber in allen anderen Verhältnissen, und dann

- Übergang in den Farbraum L, a, b der CIE.

4. Verfahren nach einem der Ansprüche 1 bis 3, dadurch gekennzeichnet, daß man zur Bestimmung der Grenzen des wirksamen Volumensektors jeder dieser wirksamen Paare unter Einbeziehung von Schwarz und Weiß (1, 3, B, W)

- im Bezugsfarbraum bestimmt:

  - einen Punkt Li, dessen Koordinaten der Komponente Schwarz (B) entsprechen,
  - einen Punkt Ls, dessen Koordinaten der Komponente Weiß (W) entsprechen,
  - einen Punkt Hi, dessen Koordinaten ($L_1$, $a_1$, $b_1$) derjenigen (1) der beiden Komponenten des wirksamen Paares entsprechen, die den kleinsten Farbtonwinkel ($h°_1$) besitzt,
  - einen Punkt Hs, dessen Koordinaten ($L_3$, $a_3$, $b_3$) derjenigen (3) der beiden Komponenten des wirksamen Paares entsprechen, die den größten Farbtonwinkel ($h°_3$) besitzt, und

- die Orte $\overline{Ls,Li}$, $\overline{Ls,Hs}$, $\overline{Ls,Hi}$, $\overline{Hs,Hi}$, $\overline{Li,Hi}$ und $\overline{Li,Hs}$ bestimmt, die diesen wirksamen Volumensektor begrenzen.

5. Verfahren nach Anspruch 4, dadurch gekennzeichnet, daß jeder der Orte durch Berechnung ausgehend von den Werten K und S dieser wirksamen Paare, von Schwarz und von Weiß (1, 3, B, W) bestimmt wird.

6. Verfahren nach Anspruch 4 oder 5, dadurch gekennzeichnet, daß die Fraktionierung des wirksamen Volumenraums in drei Schritten durchgeführt wird:

   - Fraktionierung in Ebenen gleicher Helligkeit in einer Anzahl von Ebenen, die gleich dem Wert der Helligkeitsdifferenz ($L_W$-$L_B$) zwischen Weiß und Schwarz, geteilt durch die für die betreffenden Anwendung zulässige mittlere Gesamtfarbabweichung ($\Delta E$) ist,
   - auf jeder dieser Ebenen Bestimmung der Grenzen des wirksamen Farbraums durch Berechnung und Nebeneinandersetzten der Orte der Mischungen von wirksamen Farbkomponenten, die durch Mischung der Komponenten jedes wirksamen Paares mit Schwarz oder Weiß zu gleicher Helligkeit gebracht werden, und zwar je nach dem, ob die Helligkeit der Ebene kleiner oder größer als die Helligkeit dieses Paares in den betreffenden Verhältinissen ist, und
   - Fraktionierung durch Sättigungsgleichheit, indem auf jeder Ebene gleicher Helligkeit konzentrische Kreise ($C_1$, $C_2$, $C_3$ usw.) in einem Schritt gezeichnet werden, der gleich der für die betreffende Anwendung zulässigen mittleren Gesamtfarbabweichung ($\Delta E$) ist, und indem dann ebensoviele Ringsektoren bestimmt werden, wie die auf diese Weise erhaltenen vollständigen Ringe ($A_9$, $A_{10}$ usw.) oder Ringteile

($A_1$, $A_2$ usw.) Sektoren mit einem Winkel vom Wert 2δ.h° enthalten, wobei

$$\delta h° = \text{arctg} (\Delta E/2)/(C^2 - \Delta E^2/4)^{1/2}$$

worin

h°    der Farbtonwinkel ist,
$\Delta E$    die bei der betreffenden Anwendung zulässige mittlere Gesamtfarbabweichung ist und
C    der Mittelwert der Radien der Kreise ($C_1$, $C_2$) ausgedrückt in CIELab-Einheit ist.

7. Verfahren nach Anspruch 6, dadurch gekennzeichnet, daß die Kennzeichnung jeder Volumensektionsfraktion, d.h. jedes Farbtons der Farbpalette, die Werte der Helligkeit L und die Werte C und h° dieses Farbtons angibt.

8. Verfahren nach Anspruch 6 oder 7, dadurch gekennzeichnet, daß jeder Farbtonkennzeichnung einerseits eine theoretische Spektralreemissionskurve, die durch Syntheseberechnung des Reflexionsgrads einer Mischung erhalten wird, deren qualitative Zusammenssetzung durch die Volumensektionsfraktion der Farbpalette definiert ist, zu der der Farbton gehört, und andererseits die quantitative Zusammensetzung dieses Farbtons entsprechen.

9. Verwendung der direkt durch das Verfahren nach einem der Ansprüche 3 bis 8 erhaltenen Farbpalette zur Verringerung des Interinstrumentalfehlers zwischen

   - dem für die Herstellung dieser Farbpalette verwendeten Spektralfotometer, "Basisspektralfotometer" genannt, und
   - einem Spektralfotometer einer anderen Herstellung, "neues Spektralfotometer" genannt,

dadurch gekennzeichnet, daß sie aus den folgenden Schritten besteht:

   - man mißt mit dem neuen Spektralfotometer den Spektralreflexionsgrad R'(λ) der Mischungen, der zur Berechnung der Spektralkoeffizienten K(λ) und S(λ) jeder Basiskomponente der für die Herstellung der Farbpalette verwendeten Sammlung gedient hat,
   - man nimmt ausgehend von diesen Spektralreflexionsgraden R'(λ) auf eine an sich bekannte Weise eine Neuberechnung der dem neuen Spektralfotometer spezifischen Werte der Spektralkoeffizienten K'(λ) und S'(λ) jeder Basiskomponente vor,
   - man nimmt durch Reflexionsgradsynthese eine Neuberechnung der Spektralreflexionsgrade

R'($\lambda$) jeder Kennzeichnung der Farbpalette, "Basiskennzeichnung" (Ref$_b$) genannt, ausgehend von der mit jeder Kennzeichnung verbundenen qualitativen und quantitativen Zusammensetzung vor,

- man nimmt eine neue Kennzeichnung (Ref$_n$) durch Berechnung der Werte L, C und h° ausgehend von den Spektralreflexionsgraden R'($\lambda$) jeder Kennzeichnung vor,

- man stellt eine Entsprechung zwischen jeder Basiskennzeichnung (Ref$_b$) und der mit dem neuen Spektralfotometer erhaltenen Kennzeichnung (Ref$_n$) her,

- man setzt jede mit dem neuen Spektralfotometer gemachte Messung des Spektralreflexionsgrads R'($\lambda$) mit einem Kennzeichen (Refn) der neuen Kennzeichnung gleich und

- man sucht die Gleichwertigkeit zwischen der neuen Kennzeichnung (Ref$_n$) und der Basiskennzeichnung (Ref$_b$).

**Claims**

1. Method for producing a colour chart by partitioning a colour space corresponding to a determined collection (1 to 11, B,W) of colour components, including one black and one white which consists:

   - in starting from a collection (1 to 11, B,W) of so-called "base" colour components, which collection covers a colour space comprising all the hues which can be produced by mixing the said base colour components, and

   - in subdividing the colour space into fractions, each of which being assigned a reference (Ref$_b$), the set of said fractions thus delimited and identified constituting the expected colour chart,

   characterized in that, in order to adapt the said method to a particular industrial application, the said method furthermore includes the following steps:

   - the said collection is formed in such a way that the colour space which it covers is a space termed "effective" in relation to the envisaged application,

   - the said effective colour space is evaluated by choosing a reference colour space which encompasses the said effective colour space, and by determining, through measurement of the full tones of each base colour component in the said collection and calculations, known per se, performed on the basis of these measurements, the trichromatic coordinates of the said base components in the reference colour space,

   - the base colour components (1 to 11), with the exception of black and white, are classed in increasing order of hue angle h°, thus obtaining a set of so-called "standard" colour components, and each of them is positioned graphically according to its trichromatic coordinates, disregarding the luminance, joining the said positions to one another resulting in a number of polygons of various surface areas being plotted,

   - a subset of components, referred to as "effective colour components", is selected from the said standard colour components by retaining only those (1, 3, 5, 6, 7,8, 10, 11) of the said standard colour components which form the outer limits of the polygon having the greatest surface area,

   - in the effective colour space, and for each of the pairs of effective colour components directly adjacent on the graphical plot (1, 3), these being referred to as "effective pairs", taken with black (B) and white (W), the limits of the so-called "effective" volume sector to which the said effective couple corresponds are determined, and

   - the operation of partitioning the colour space is carried out by partitioning each effective volume sector into isoluminance planes and as a function of the working average $\Delta$ E of overall colour difference which is allowable for the industrial application in question.

2. Method according to Claim 1, characterized in that the reference colour space is the CIELAB space.

3. Method according to Claim 2, characterized in that the step of evaluating the effective colour space includes:

   - measurement by spectrophotometer of the reflectance factor R of binary mixtures of base colour components (1 to 11, B,W),

   - calculation of the spectral coefficients K of absorption and S of scattering of each component on the basis of the values of R thus measured by applying the laws of Kubelka-Munk and Saunderson,

   - on the basis of these values K and S, calculation of the reflectance factor R of the mixtures with the same qualitative composition as the mixtures previously measured but in all other proportions, then

   - conversion to the CIE colour space L, a, b.

4. Method according to any one of Claims 1 to 3, characterized in that, in order to determine the limits of the effective volume sector of each of the said effective pairs, taken with black and white (1, 3, B,W):

- the following are determined in the reference colour space:

  - a point Li whose coordinates correspond to the black component (B),
  - a point Ls whose coordinates correspond to the white component (W),
  - a point Hi whose coordinates $(L_1, a_1, b_1)$ correspond to the component (1) of the two in the effective pair which has the smaller hue angle $(h_1)$
  - a point Hs whose coordinates $(L_3, a_3, b_3)$ corresponding to the component (3) of the two in the effective pair which has the larger hue angle $(h_3)$, and

- the loci $\overline{Ls,Li}$, $\overline{Ls,Hs}$, $\overline{Ls,Hi}$, $\overline{Hs,Hi}$, $\overline{Li,Hi}$, and $\overline{Li,Hs}$, which limit the said effective volume sector are determined.

5. Method according to Claim 4, characterized in that each of the loci is determined by calculation on the basis of the K and S value of the said effective pairs, of black and of white (1, 3, B,W).

6. Method according to Claim 4 or 5, characterized in that the effective volume space is partitioned in three steps:

- partitioning into isoluminance planes using a number of planes equal to the value of the difference $(L_W - L_B)$ in luminance between white and black, divided by the average overall colour difference $(\Delta E)$ allowable for the application in question,
- on each of the said planes, determination of the limits of the effective colour space by calculation and juxtaposition of the loci of the mixtures of effective colour components brought to isoluminance hy mixing the components of each effective pair with black or with white, depending on whether the luminance of the plane is less than or greater than the luminance of the said pair in the proportions in question, and
- partitioning by isosaturation by plotting concentric circles $(C_1, C_2, C_3,$ etc.) on each isoluminance plane with a spacing equal to the average overall colour difference $(\Delta E)$ allowable for the application in question, then by determining as many ring sectors as the complete rings $(A_9, A_{10},$ etc.) or ring portions $(A_1, A_2,$ etc.) thus obtained contain angle sectors of value $2.\delta h°$, such that

$$\delta h° = \arctan (\Delta E/2) / [C^2 - \Delta E^2/4]^{\frac{1}{2}}$$

where

h° is the hue angle
$\Delta E$ is the average of overall colour difference allowable for the application in question
C is the average of the radii of the circles $(C_1, C_3)$, expressed in CIELab units.

7. Method according to Claim 6, characterized in that the referencing of each volume section fraction, that is to say of each hue of the colour chart, indicates the luminance values L and the values C and h° of the said hue.

8. Method according to Claim 6 or 7, characterized in that, on the one hand, a theoretical spectral reemission curve obtained by reflectance synthesis calculation of a mixture whose qualitative composition is defined by the volume section fraction of the colour chart to which the hue belongs and, on the other hand, the quantitative composition of the latter, correspond to each hue reference.

9. Use of the colour chart obtained directly by the method according to any one of Claims 3 to 8, for reducing the inter-instrument error between:

- the so-called "base" spectrophotometer employed for producing the said colour chart, and
- a different make of spectrophotometer, referred to as the "new spectrophotometer",

characterized in that it includes the following steps:

- the reflectance spectral factor $R'(\lambda)$ of the mixtures which have been used for calculating the spectral coefficients $K(\lambda)$ and $S(\lambda)$ of each base component in the collection used to produce the colour chart is measured with the new spectrophotometer,
- on the basis of the said reflectance spectral factors $R'(\lambda)$, the values specific to the new spectrophotometer of the spectral coefficients $K'(\lambda)$ and $S'(\lambda)$ of each base component are recalculated in a manner known per se,
- the reflectance spectral factors $R'(\lambda)$ of each reference of the colour chart, referred to as "base reference" $(Ref_b)$, are recalculated by reflectance synthesis on the basis of the qualitative and quantitative composition associated with each reference,
- new referencing $(Ref_n)$ is carried out by calculating the values L, C and h° on the basis of the reflectance spectral factors $R'(\lambda)$ of each reference,
- a correspondence is established between each base reference $(Ref_b)$ and the reference $(Ref_n)$ obtained with the new spectrophotometer,

- each reflectance spectral factor measurement R' (X) taken with the new spectrophotometer is paired with a reference ($Ref_n$) of the new referencing, and
- equivalence between the new referencing ($Ref_n$) and the base referencing ($Ref_b$) is sought.

FIG1

FIG2

FIG3

FIG4